# EUROPEAN PATENT APPLICATION

(11) **EP 3 135 575 A1**
(43) Date of publication of application: **01.03.2017**
(21) Application number: 16181114.6
(22) Date of filing: 25.07.2016
(51) Int. Cl.: B62M 3/04, B62M 3/06

(54) **DEVICE FOR BICYCLES**

(30) Priority: 03.08.2015 IT UB20152762
(71) Applicant: Zanieri, Gianni, 50018 Scandicci (FI) (IT)
(72) Inventor: Zanieri, Gianni, 50018 Scandicci (FI) (IT)
(74) Representative: Mincone, Antimo

(57) **Abstract**

Device for bicycles, comprising a substantially elliptical-shaped guide (10) and an arm-pedal (11, 18) adapted to be fixed to the hub (15) of a gear wheel (16) of a bicycle and adapted to rotate integrally with said hub (15) under the action exerted by the user on the respective pedal (18), a part (17) of the arm-pedal (11) being engaged in said guide (10) following the profile thereof while the arm-pedal (11) rotates with the hub (15), wherein the arm-pedal (11) comprises a first external element (12) and a second inner element (13) adapted to slide inside the first element (12). Said first external element (12) of the arm-pedal (11) has a first open end and a second open end (120, 121) and is fixed to the hub (15) in correspondence of a first open end (120). The second inner element (13) is inserted in the first external element (12) passing through said first and second open ends (120, 121) of the first external element (12).

## Description

The present invention relates to the field of bicycles, in particular to devices which facilitate the pedaling.

Various devices are known which aim to alleviate the fatigue of pedaling, for example with special mechanisms (transmission) or small battery-powered electric motors (assisted pedaling).

DE4119317 discloses a device for bicycles comprising a substantially elliptical guide and a telescopic arm-pedal fixed to the hub of the gear wheel of a bicycle capable of rotating under the action exerted by the user. The telescopic arm-pedal is slidably engaged in said guide. A similar device is disclosed in JP2001071981.

There is still the need for a device which allows an easier pedaling and that at the same time is of simple construction and installation on the bicycle. The main purpose of the present invention is to propose a device that satisfies this need.

This result has been achieved, in accordance with the present invention, by adopting the idea of making an apparatus having the features indicated in claim 1. Other features of the invention are object of the dependent claims.

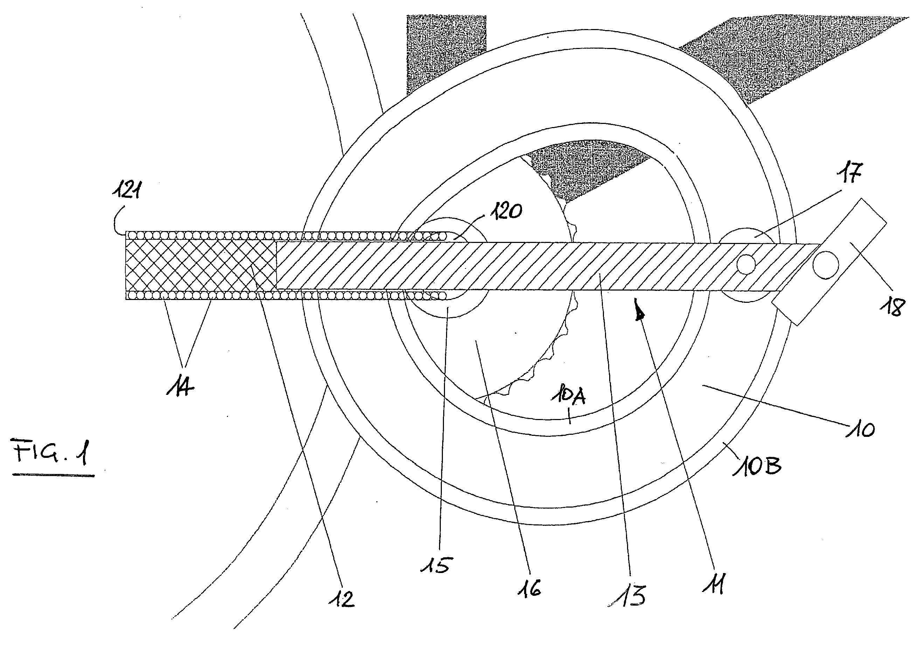

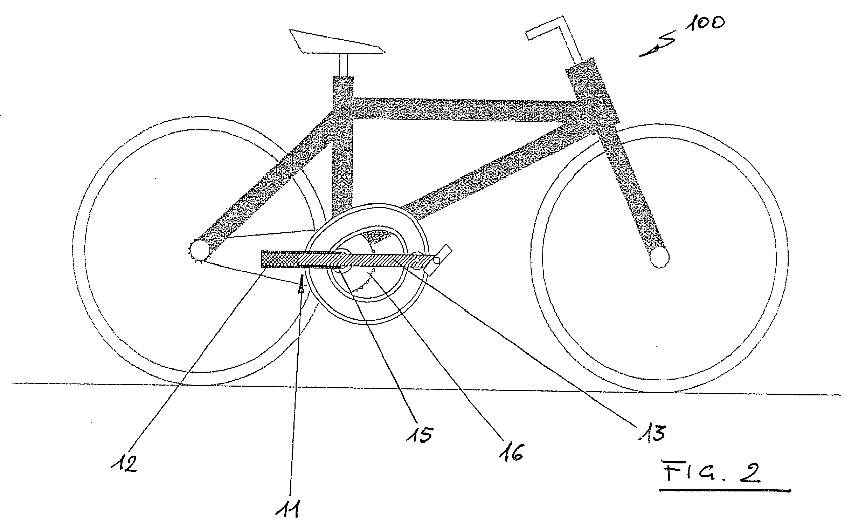

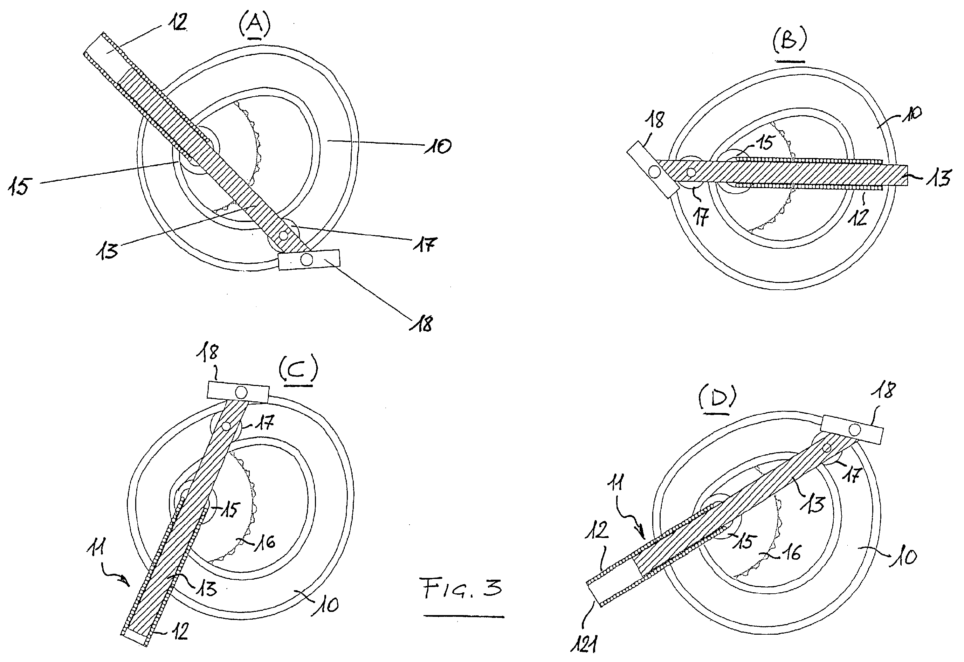

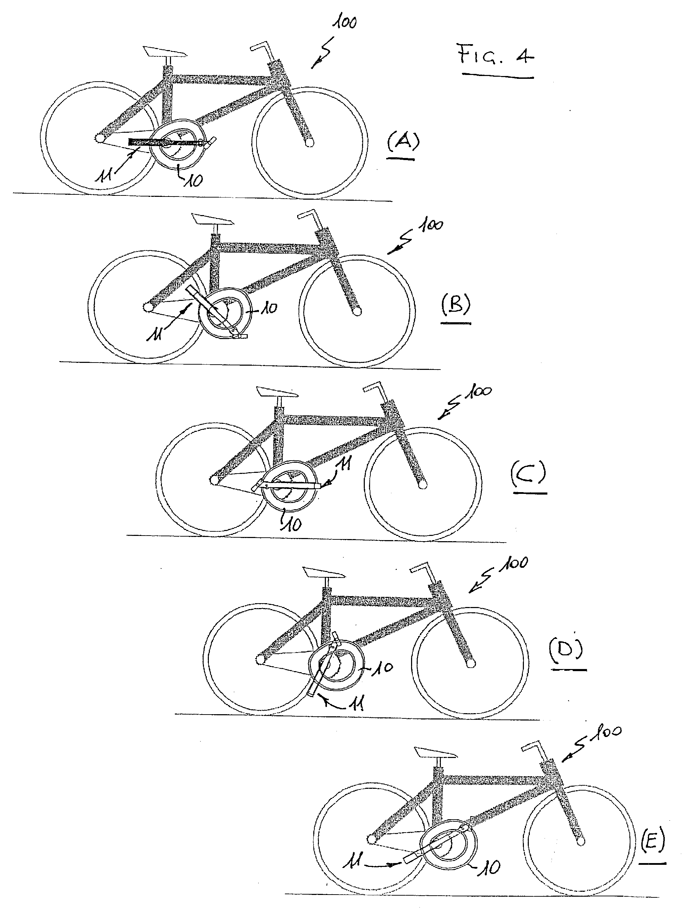

The present invention will be better understood by anyone skilled in the art thanks to the following description and to the attached drawings, provided by way of example but not to be considered in a limitative sense, wherein:
▪ Figure 1 schematically illustrates a device according to the invention;
▪ Figure 2 schematically shows the device of Fig.1 mounted on a bicycle;
▪ Figure 3 (A -D) schematically shows the movement of the arm-pedal;
▪ Figure 4 (A-E) schematically show the movement of the arm-pedal with the device mounted on a bicycle.

Reduced to its basic structure and with reference to the figures of the attached drawings, a device in accordance with the present invention is of the type comprising an essentially elliptical guide 10 pedal and an arm-pedal 11 capable of sliding in said guide. In particular, the arm-pedal is fixed to the hub 15 of the gear wheel 16 of the bicycle, and thus is able to rotate under the action of the user. As further explained below, a part of the arm-pedal 11 is slidably engaged in the guide 10. The device is easily applicable to a bicycle frame 100.

As shown in Figure 1 a device according to the invention comprises a hollow guide 10 whose edges 10A, 10B delimit a track having a substantially elliptical shape and an arm-pedal 11 consisting of two elements: a first element, external, 12 and a second element, internal, 13 capable of sliding inside the first element 12. In the example, between the said elements 12, 13 of the arm-pedal 11 there are interposed spheres 14 that reduce the friction generated by the sliding of the inner element 13. It is understood, however, that in place of the spheres 14 similar mechanical elements able to reduce the friction may be used. For example, rollers may be used. Alternatively, the surfaces of the elements 12, 13 may be coated with so-called "self-lubricating" materials f such as Teflon or may be lubricated in any other way.

As shown in Figure 2, the essentially elliptical guide 10 is mounted on a side of the bicycle frame, with its major axis parallel to the ground, so that the hub 15 of the gear wheel 16 is in proximity of the interior edge 10A of said guide 10 and the outer element 12 of the arm-pedal 11 is integrally connected to the hub 15 of the ring gear 16 and is therefore able to rotate with it.

An end portion of the inner element 13 of the arm-pedal protrudes from the guide 10 and engages in the latter by means of a ball bearing 17 (or by means of a roller or a pivot or any other device able to reduce the friction) and the pedal 18 is pivoted on it.

The guide 10 with the arm-pedal 11 as described above is obviously mounted on both sides of the bicycle frame.

The operation of the device according to the invention is evident in itself and is in any case exemplified in Figures 3 and 4.

Starting from the position of Fig.3A, the application of the user's weight on the pedal 18 will provoke the rotation, along the guide 10, of the ball bearing 17 which engages the arm-pedal 11 to the guide 10; at the same time the outer element 12 of the arm-pedal, connected integrally to the hub of the gear wheel 16 of the bicycle, rotates upwards while the internal element 13 of the arm-pedal slides inside the element 12 up to the position of maximum contraction of the arm-pedal (Fig.3B); continuing to pedaling (Fig.3C), the inner element 13 protrudes from the inner 12 element up to its maximum extension (Fig.3D).

The sliding of the pedal back and forth during its movement along the elliptical guide 10 greatly facilitates the pedaling reducing the user's fatigue. The device according to the invention may be manufactured using the most suitable materials for the purpose, preferably metal, resins, plastics and the like, and the fixing of the guide 10 to the frame can be achieved using the means and the fixing processes commonly employed for this purpose , also as a function of the materials used, such as welding, fastening with screws or bolts, etc.

As shown in the drawings, the outer element 12 is connected to the hub 15 in correspondence of a first open end 120, and the inner element 13 is inserted into the outer element 12 passing through said first open end 120 and through a second open end 121 of the same external element 12. In other words: the outer element 12 of the arm-pedal has a first and a second open end 120, 121; the first open end 120 of the element 12 is in correspondence the hub 15; the second open end 121 of the outer element 12 is opposite to the first open end 120 and therefore is at a greater distance from the hub 15; the inner element 13 is free to slide into the outer element 12 and is free to pass both through the first end 120 and through which the second end 121 of the latter depending on the arm-pedal position. As shown in the attached drawings, during the rotation of the hub 15, the inner element 13 of the arm-pedal cyclically exhibits a part protruding through said first open end 120 or a part protruding through the second open end 121 of the outer element 12 in function of its position. In positions of Fig.3A, Fig.3C and Fig.3D the inner element 13 protrudes only through the front open end 120 of the outer element 12. In the position of Fig.3B the inner element 13 also exhibits a part projecting through the rear open end 121 of the outer element 12. According to the example illustrated in the attached drawings, the inner element 13 is longer than the outer element 12.

The structure of the arm-pedal 11 described above allows to increase the length of the element 13 with respect to the known devices, in parity of every other condition, enhancing its effectiveness.

In practice the details of execution may vary in any equivalent way as for what concerns the individual elements described and illustrated without thereby departing from the scope of the adopted solution and thus remaining within the limits of the protection conferred by the present patent.

## Claims

1. Device for bicycles, comprising a substantially elliptical-shaped guide (10) and an arm-pedal (11, 18) adapted to be fixed to the hub (15) of a gear wheel (16) of a bicycle and adapted to rotate integrally with said hub (15) under the action exerted by the user on the respective pedal (18), a part (17) of the arm-pedal (11) being engaged in said guide (10) following the profile thereof while the arm-pedal (11) rotates with the hub (15), wherein the arm-pedal (11) comprises a first external element (12) and a second inner element (13) adapted to slide inside the first element (12), **characterized in that** said first external element (12) of the arm-pedal (11) has a first open end and a second open end (120, 121) and is fixed to the hub (15) in correspondence of a first open end (120), and the second inner element (13) is inserted in the first external element (12) passing through said first and second open ends (120, 121) of the first external element (12).

2. Device according to claim 1 **characterized in that** between the first element (12) and the second element (13) of the telescopic arm-pedal there are interposed means (14) adapted to reduce the friction generated by the sliding of the second element (13) inside the first element (12).

3. Device according to claim 1 **characterized in that** said guide (10) has an inner edge (10A) and an outer edge (10B) which in cooperation between them delimit a track for a bearing (17) or similar device attached to the said second element (13) of the telescopic arm-pedal.

4. Device according to claims 1 and 3 **characterized in that** the essentially elliptical in shape guide (10) is applied integrally on the flanks of the bicycle frame (100), with its major axis parallel to the ground, such that the hub (15) of the gear wheel (16) is in the proximity of the inner edge (10A) of said guide (10) and the outer element (12) of the arm-pedal (11) is integrally connected to the hub (15) of the gear wheel (16).
